# EUROPÄISCHE PATENTANMELDUNG

(11) **EP 2 933 667 A1**
(43) Veröffentlichungstag der Anmeldung: **21.10.2015**
(21) Anmeldenummer: 15163304.7
(22) Anmeldetag: 13.04.2015
(51) Int. Cl.: G02B 6/38

(54) **STECKVERBINDERVORRICHTUNG**

(30) Priorität: 17.04.2014 DE 102014105524
(71) Anmelder: Reichle & De-Massari AG, 8620 Wetzikon (CH)
(72) Erfinder: Streiff, Claudio, 8610 Uster (CH); Eggimann, Fabian, 8057 Zürich (CH)
(74) Vertreter: Daub, Thomas

(57) **Zusammenfassung**

Es wird eine Steckverbindervorrichtung vorgeschlagen, insbesondere für einen feldkonfektionierbaren optischen Steckverbinder (10a; 10b; 10c; 10d), mit zumindest einer Spleißeinheit (12a; 12b; 12c; 12d), welche dazu vorgesehen ist, eine mechanische Spleißung wenigstens zweier optischer Fasern (14a, 16a; 14b, 16b; 14c, 16c; 14d, 16d) herzustellen, mit zumindest einer Federklemme (18a; 18b; 18c; 18d) zur Fixierung der wenigstens zwei optischen Fasern (14a, 16a; 14b, 16b; 14c, 16c; 14d, 16d) in der zumindest einen Spleißeinheit (12a; 12b; 12c; 12d) in einer Spleißposition durch zumindest eine Federkraft, und mit wenigstens einem in einem montierten Zustand und in einer Schließstellung der zumindest einen Federklemme (18a; 18b; 18c; 18d) unverlierbaren Betätigungselement (20a; 20b; 20c; 20d), welches dazu vorgesehen ist, die zumindest eine Federklemme (18a; 18b; 18c; 18d) entgegen der Federkraft wenigstens teilweise zu öffnen, und welches zumindest ein wenigstens im Wesentlichen quaderförmig ausgebildetes Betätigungsmittel (48a; 48b; 48c; 48d) aufweist, welches zu einem Einschieben in einen Bereich der zumindest einen Federklemme (18a; 18b; 18c; 18d) vorgesehen ist.

## Beschreibung

### Stand der Technik

Die Erfindung betrifft eine Steckverbindervorrichtung nach Anspruch 1.

Aus der EP 0 846 965 B1 ist eine Steckverbindervorrichtung für einen feldkonfektionierbaren optischen Steckverbinder bekannt, welche eine zweiteilige Spleißeinheit zur mechanischen Spleißung zweier optischer Fasern und eine die Spleißeinheit zumindest teilweise umgebende C-förmige Federklemme umfasst. Ein separates keilförmiges Betätigungselement ist dazu vorgesehen, die Federklemme entgegen einer Federkraft zu öffnen.

Die Aufgabe der Erfindung besteht insbesondere darin, eine gattungsgemäße Steckverbindervorrichtung mit vorteilhaften Eigenschaften hinsichtlich einer Öffnung und/oder Schließung einer Federklemme bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Steckverbindervorrichtung vorgeschlagen, insbesondere für einen feldkonfektionierbaren optischen Steckverbinder, mit zumindest einer Spleißeinheit, welche dazu vorgesehen ist, eine mechanische Spleißung wenigstens zweier optischer Fasern herzustellen, mit zumindest einer Federklemme zur Fixierung der wenigstens zwei optischen Fasern in der zumindest einen Spleißeinheit in einer Spleißposition durch zumindest eine Federkraft, und mit wenigstens einem in einem montierten Zustand und in einer Schließstellung der zumindest einen Federklemme unverlierbaren Betätigungselement, welches dazu vorgesehen ist, die zumindest eine Federklemme entgegen der Federkraft wenigstens teilweise zu öffnen, und welches zumindest ein wenigstens im Wesentlichen quaderförmig ausgebildetes Betätigungsmittel aufweist, welches zu einem Einschieben in einen Bereich der zumindest einen Federklemme vorgesehen ist

Unter einer "Steckverbindervorrichtung" soll hier und im Folgenden insbesondere ein Teil, insbesondere eine Unterbaugruppe, eines Steckverbinders, insbesondere eines Steckers und vorzugsweise eines SC-, LSH- oder LC-Steckers verstanden werden. Unter einem "feldkonfektionierbaren optischen Steckverbinder" soll insbesondere ein optischer Steckverbinder verstanden werden, welcher eine Konfektionierung zumindest eines freien optischen Faserendes unter Feldbedingungen gestattet. Hierbei wird das zumindest eine freie optische Faserende mittels einer mechanischen Spleißung mit wenigstens einem Faserstummel verbunden, welcher insbesondere mit einer Ferrule vorkonfektioniert ist, wobei eine Vorkonfektionierung insbesondere unter kontrollierten Bedingungen und vorzugsweise durch Fachpersonal stattfinden kann. Unter einer "mechanischen Spleißung" soll in diesem Zusammenhang insbesondere eine insbesondere reversible optische Kopplung von wenigstens zwei, insbesondere entlang einer Geraden angeordneten, optischen Fasern verstanden werden, deren Enden mittels einer Spleißeinheit insbesondere derart fixiert sind, dass sie sich bei hergestellter mechanischer Spleißung zumindest im Wesentlichen berühren. Darunter, dass Enden von optischen Fasern sich "zumindest im Wesentlichen berühren", soll insbesondere verstanden werden, dass ein Abstand der Enden in dem Spleißbereich höchstens 15 µm, insbesondere maximal 10 µm, vorzugsweise höchstens 5 µm und besonders vorteilhaft maximal 1 µm beträgt.

Unter einer "Spleißeinheit" soll insbesondere eine Einheit verstanden werden, welche zumindest ein Spleißelement mit wenigstens einer Faserführungsstruktur umfasst, welche zu einer zumindest teilweisen Fixierung wenigstens einer optischen Faser bei hergestellter mechanischer Spleißung vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Faserführungsstruktur" eines Spleißelements soll in diesem Zusammenhang insbesondere eine Struktur, insbesondere eine Oberflächenstruktur, des Spleißelements verstanden werden, welche zu einer wenigstens teilweisen Aufnahme zumindest einer optischen Faser vorgesehen ist. Vorzugsweise ist die wenigstens eine Faserführungsstruktur zumindest teilweise als eine Nut ausgebildet, welche besonders vorteilhaft zumindest abschnittsweise einen zumindest im Wesentlichen dreieckigen, insbesondere gleichschenklig dreieckigen, Querschnitt aufweist. Unter einem "zumindest im Wesentlichen dreieckigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer Dreieckform unterscheidet. Vorzugsweise ist eine Haupterstreckungsrichtung der wenigstens einen Faserführungsstruktur, insbesondere der Nut, zumindest im Wesentlichen parallel zu einer Haupterstreckungsrichtung der zumindest einen Spleißeinheit. Unter "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung von höchstens 10°, insbesondere von maximal 7,5°, vorzugsweise von höchstens 5° und besonders vorteilhaft von maximal 2,5° aufweist. Unter einer "Haupterstreckungsrichtung" eines Objekts soll insbesondere eine Richtung verstanden werden, welche parallel zu einer längsten Kante eines kleinsten gedachten Quaders ist, welcher das Objekt gerade noch vollständig umschließt.

Unter einer "Spleißposition" soll insbesondere eine Position innerhalb der zumindest einen Spleißeinheit verstanden werden, an welcher wenigstens ein Ende einer optischen Faser bei hergestellter mechanischer Spleißung angeordnet ist.

Unter einer "Federklemme" soll in diesem Zusammenhang insbesondere eine mehrteilige oder vorzugsweise eine einteilige Klemme mit wenigstens zwei, relativ zueinander federnd ausgebildeten Federarmen verstanden werden. Vorzugsweise ist die Federklemme einstückig ausgebildet und besteht besonders vorteilhaft aus einem Federstahl. Vorzugsweise sind die wenigstens zwei Federarme einander gegenüberstehend angeordnet, wobei insbesondere zwischen den wenigstens zwei Federarmen ein Aufnahmebereich für die zumindest eine Spleißeinheit gebildet ist. Insbesondere umgreift die zumindest eine Federklemme die zumindest eine Spleißeinheit im montierten Zustand wenigstens teilweise, insbesondere auf wenigstens zwei und vorzugsweise auf zumindest drei Seiten. Vorzugsweise weist die Federklemme zumindest abschnittsweise einen zumindest im Wesentlichen C- oder U-förmigen Querschnitt auf. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Unter einem "zumindest im Wesentlichen C- oder U-förmigen Querschnitt" soll in diesem Zusammenhang insbesondere ein Querschnitt verstanden werden, welcher sich mit einem Flächenanteil von höchstens 40 %, insbesondere von maximal 30 %, vorzugsweise von höchstens 20 % und besonders vorteilhaft von maximal 10 % von einer C- oder U-Form unterscheidet. Darunter, dass die zumindest eine Federklemme "zur Fixierung der wenigstens zwei optischen Fasern in der zumindest einen Spleißeinheit" vorgesehen ist, soll insbesondere verstanden werden, dass die wenigstens zwei optischen Fasern bei hergestellter mechanischer Spleißung durch die Federkraft der zumindest einen Federklemme in der zumindest einen Spleißeinheit gehalten sind, insbesondere durch einen Reibschluss. Eine Fixierung der wenigstens zwei optischen Fasern kann dabei zwischen zumindest zwei Spleißelementen der zumindest einen Spleißeinheit erfolgen. Vorzugsweise erfolgt die Fixierung der wenigstens zwei optischen Fasern jedoch zwischen einem Spleißelement der zumindest einen Spleißeinheit und der zumindest einen Federklemme, insbesondere wenigstens einem Federarm der zumindest einen Federklemme und insbesondere unmittelbar.

Unter einem "Betätigungselement" soll in diesem Zusammenhang insbesondere ein Element verstanden werden, welches mittelbar oder unmittelbar von einem Bediener betätigbar ist. Unter einer "Schließstellung" der zumindest einen Federklemme soll in diesem Zusammenhang insbesondere ein Zustand der zumindest einen Federklemme bei hergestellter mechanischer Spleißung verstanden werden. Darunter, dass das wenigstens eine Betätigungselement in einem montierten Zustand und in einer Schließstellung der zumindest einen Federklemme "unverlierbar" ist, soll insbesondere verstanden werden, dass das wenigstens eine Bestätigungselement im montierten Zustand und in der Schließstellung auf beliebige Weise, insbesondere auch mittelbar, befestigt ist, und insbesondere von der übrigen Steckverbindervorrichtung untrennbar ausgebildet ist. Das zumindest eine Betätigungsmittel ist vorzugsweise einstückig mit dem wenigstens einen Betätigungselement ausgebildet. Insbesondere ist das zumindest eine Betätigungsmittel, zu einem zumindest teilweisen Öffnen der wenigstens einen Federklemme, insbesondere durch eine Betätigung des wenigstens einen Betätigungselements, wenigstens teilweise in die wenigstens eine Federklemme einschiebbar, insbesondere zwischen die wenigstens zwei Federarme der zumindest einen Federklemme. Besonders vorteilhaft ist das zumindest eine Betätigungsmittel wenigstens teilweise zwischen wenigstens einen Federarm der zumindest einen Federklemme und wenigstens ein Spleißelement der zumindest einen Spleißeinheit einschiebbar, und zwar insbesondere derart, dass das zumindest eine Betätigungsmittel beim zumindest teilweisen Öffnen der zumindest einen Federklemme das wenigstens eine Spleißelement und/oder die zumindest eine Federklemme unmittelbar berührt. Unter "zumindest im Wesentlichen quaderförmig" soll in diesem Zusammenhang insbesondere verstanden werden, dass die Form des zumindest einen Betätigungsmittels insbesondere mit einem Volumenanteil von weniger als 15 %, vorzugsweise von weniger als 10 % und besonders bevorzugt von weniger als 5 % von einem Quader abweicht.

Durch eine solche Ausgestaltung kann eine Steckverbindervorrichtung bereitgestellt werden, welche vorteilhafte Eigenschaften hinsichtlich einer insbesondere zuverlässigen und/oder präzisen Öffnung und/oder Schließung einer Federklemme aufweist, insbesondere im Vergleich zu einem keilförmigen Betätigungsmittel. Insbesondere können durch eine quaderförmige Ausgestaltung des zumindest einen Betätigungsmittels Toleranzanforderungen vorteilhaft minimiert werden, wodurch insbesondere ein mögliches Spiel des zumindest einen Betätigungsmittels vorteilhaft reduziert und somit eine vorteilhaft zuverlässige und/oder präzise Öffnung und/oder Schließung der zumindest einen Federklemme erreicht werden kann. Ferner kann eine vorteilhafte Vorzentrierung des zumindest einen Betätigungsmittels bei einem Einführen in die zumindest eine Federklemme erreicht werden.

Ferner wird vorgeschlagen, dass die Steckverbindervorrichtung eine Gehäuseeinheit und zumindest ein Bedienelement umfasst, mit welchem das wenigstens eine Betätigungselement im montierten Zustand in Wirkverbindung steht und welches von außerhalb der Gehäuseeinheit bedienbar ist. Unter einer "Gehäuseeinheit" soll in diesem Zusammenhang insbesondere eine Baueinheit verstanden werden, welche zumindest eine weitere Einheit der Steckverbindervorrichtung, insbesondere die zumindest eine Spleißeinheit, im montierten Zustand gegenüber einer Umgebung abdeckt und welche insbesondere mehrere Bauelemente umfassen kann. Vorzugsweise ist die Gehäuseeinheit zumindest im Wesentlichen geschlossen ausgebildet. Darunter, dass die Gehäuseeinheit "zumindest im Wesentlichen geschlossen" ausgebildet ist, soll insbesondere verstanden werden, dass die Gehäuseeinheit in einem montierten Zustand einen räumlichen Bereich umschließt und ein Gesamtflächeninhalt aller Ausnehmungen in einer Außenwand der Gehäuseeinheit insbesondere maximal 40 %, insbesondere höchstens 30 %, vorzugsweise maximal 20 % und besonders vorteilhaft höchstens 10 % eines Gesamtflächeninhalts der Außenwand der Gehäuseeinheit beträgt. Unter einem "Bedienelement" soll insbesondere ein Element verstanden werden, welches zum Zwecke einer Bedienung von einem Bediener insbesondere unmittelbar anfassbar, insbesondere drückbar und/oder verschiebbar und/oder drehbar, ist. Darunter, dass das wenigstens eine Betätigungselement im montierten Zustand mit dem zumindest einen Bedienelement "in Wirkverbindung steht", soll insbesondere verstanden werden, dass das zumindest eine Bedienelement und das wenigstens eine Betätigungselement im montierten Zustand derart relativ zueinander angeordnet und/oder mittelbar oder unmittelbar miteinander verbunden sind, beispielsweise mittels einer Rast- und/oder Schraubverbindung und/oder vorzugsweise einstückig, dass zumindest während einer Bedienung des zumindest einen Bedienelements durch einen Bediener zwischen dem zumindest einen Bedienelement und dem wenigstens einen Betätigungselement eine Kraftübertragung in wenigstens eine Richtung erfolgt. Hierdurch kann ein Bedienkomfort vorteilhaft gesteigert werden, insbesondere da für einen Bediener eine bequeme Zugänglichkeit erreicht werden kann.

Vorteilhaft ist das zumindest eine Bedienelement und vorzugsweise auch das zumindest eine Betätigungselement als ein Verschiebeteil ausgebildet, welches im montierten Zustand relativ zu wenigstens einem Element der Gehäuseeinheit verschiebbar ausgebildet ist. Unter einem "Verschiebeteil" soll in diesem Zusammenhang insbesondere ein Teil der Steckverbindervorrichtung verstanden werden, welches im montierten Zustand relativ zu wenigstens einem weiteren Bauteil der Steckverbindervorrichtung entlang einer Verschieberichtung translatorisch verschiebbar ist, wobei eine derartige Verschiebung insbesondere ein Herstellen und/oder Aufheben der mechanischen Spleißung nach sich zieht. Hierdurch kann eine besonders vorteilhafte Bedienbarkeit erreicht werden. Ferner können eine vorteilhaft einfache Kraftübertragung und insbesondere ein geradliniger Kraftfluss auf die zumindest eine Federklemme erreicht werden.

Ferner wird vorgeschlagen, dass eine Verschieberichtung des Verschiebeteils und eine Haupterstreckungsrichtung der zumindest einen Spleißeinheit zueinander unter einem Winkel von mehr als 0° und weniger als 180° angeordnet sind. Vorzugsweise sind die Verschieberichtung des Verschiebeteils und die Haupterstreckungsrichtung der zumindest einen Spleißeinheit unter einem zumindest im Wesentlichen rechten Winkel zueinander angeordnet. Unter einem "zumindest im Wesentlichen rechten Winkel" soll insbesondere ein Winkel verstanden werden, welcher maximal um 10°, insbesondere höchstens um 5° und besonders vorteilhaft maximal um 2° von einem rechten Winkel abweicht. Hierdurch kann eine vorteilhaft einfache Konstruktion erreicht werden.

Beträgt eine für ein zumindest im Wesentlichen vollständiges Öffnen und/oder Schließen der zumindest einen Federklemme benötigte Verschiebedistanz des Verschiebeteils zumindest 0,1 mm, vorteilhaft zumindest 0,2 mm und besonders vorteilhaft zumindest 0,3 mm, kann, insbesondere bei einer manuellen Betätigung, ein vorteilhaft langsames und/oder kontrolliertes und/oder zuverlässiges Öffnen und/oder Schließen der zumindest einen Federklemme erreicht werden.

Weist die zumindest eine Federklemme zumindest einen abgewinkelten Bereich auf, welcher dazu vorgesehen ist, ein Einschieben des zumindest einen Betätigungsmittels zu ermöglichen und/oder zu vereinfachen, kann vorteilhaft ein Verklemmen und/oder Verkannten des zumindest einen Betätigungselements während eines Öffnungsvorgangs zumindest weitgehenden vermieden werden. Unter einem "abgewinkelten Bereich" soll in diesem Zusammenhang insbesondere ein Bereich an einem dem zumindest einen Betätigungsmittel zugewandten Ende eines Federarms der zumindest einen Federklemme verstanden werden, welcher bei einer Betrachtung entlang einer Haupterstreckungsrichtung der zumindest einen Federklemme mit zumindest einem weiteren Bereich des Federarms einen größten Winkel von maximal 170°, vorteilhaft von maximal 150° und besonders vorteilhaft von maximal 130° einschließt.

Wenn das wenigstens eine Betätigungselement zumindest ein Verriegelungselement umfasst, welches dazu vorgesehen ist, das wenigstens eine Betätigungselement in einer geschlossenen Position der zumindest einen Federklemme zu verriegeln, kann ein unbeabsichtigtes Öffnen der zumindest einen Federklemme verhindert werden. Unter einem "Verriegelungselement" soll in diesem Zusammenhang insbesondere ein Element verstanden werden, welches in einem verriegelten Zustand eine Bewegungsfreiheit in zumindest eine Richtung wenigstens teilweise einschränkt. Vorzugsweise umfasst die zumindest eine Spleißeinheit und/oder vorzugsweise die Gehäuseeinheit wenigstens ein Element, mit welchem das zumindest eine Verriegelungselement in der geschlossenen Position der zumindest einen Federklemme verriegelt ist. Darunter, dass das zumindest eine Verriegelungselement dazu vorgesehen ist, das wenigstens eine Betätigungselement in einer geschlossenen Position der zumindest einen Federklemme "zu verriegeln", soll insbesondere verstanden werden, dass das Verriegelungselement in der geschlossenen Position der zumindest einen Federklemme einer Bewegung des wenigstens einen Betätigungselements, welche zu einem Öffnen der zumindest einen Federklemme führen würde, zumindest einen Widerstand entgegensetzt.

In einer weiteren Ausgestaltung der Erfindung wird vorgeschlagen, dass das zumindest eine Verriegelungselement als ein Rastelement ausgebildet ist. Unter einem "Rastelement" soll insbesondere ein elastisches Element zur Herstellung einer Rastverbindung verstanden werden, welches dazu vorgesehen ist, während des Herstellens und/oder während des Aufhebens der mechanischen Spleißung elastisch ausgelenkt und/oder verformt zu werden und insbesondere nach dem Herstellen und/oder nach dem Aufheben der mechanischen Spleißung elastisch in eine Ausgangslage zurückzukehren. Hierdurch kann ein vorteilhaft einfaches Verriegelungselement bereitgestellt werden.

Ferner wird vorgeschlagen, dass das zumindest eine Verriegelungselement, dazu vorgesehen ist, mit der Gehäuseeinheit zu verrasten. Insbesondere weist die zumindest eine Gehäuseeinheit hierzu zumindest ein mit dem zumindest einen Verriegelungselement korrespondierendes weiteres Verriegelungselement auf. Hierdurch kann eine vorteilhaft zuverlässige Verriegelung des zumindest einen Betätigungselements erreicht werden.

Ist das wenigstens eine Betätigungselement zumindest teilweise transparent ausgebildet, kann eine Qualität einer mechanischen Spleißung insbesondere anhand eines optischen Testsignals vorteilhaft einfach beurteilt werden. Vorzugsweise besteht das wenigstens eine Betätigungselement zumindest im Wesentlichen aus einem transluzenten Material, vorzugsweise einem Kunststoff, welcher insbesondere für ein für das menschliche Auge sichtbares Licht durchlässig ist.

Des Weiteren wird vorgeschlagen, dass die zumindest eine Spleißeinheit einstückig ausgebildet ist und eine Klemmung der wenigstens zwei optischen Fasern unmittelbar zwischen der zumindest einen Federklemme und der zumindest einen Spleißeinheit erfolgt. Hierdurch kann eine Anzahl von Bauelementen vorteilhaft reduziert werden, wodurch Kosten und/oder Toleranzanforderungen vorteilhaft minimiert werden können.

Des Weiteren wird ein Verfahren zur Feldkonfektionierung eines optischen Kabels mit einem Steckverbinder mit zumindest einer erfindungsgemäßen Steckverbindervorrichtung vorgeschlagen. Ein Mantel des zumindest einen optischen Kabels wird zumindest teilweise entfernt und somit eine optische Faser des optischen Kabels freigelegt. An einen mit der zumindest einen Steckverbindervorrichtung vorkonfektionierten Faserstummel wir ein Lichtsignal, vorzugsweise ein Rotlichtsignal angelegt. Das Lichtsignal erzeugt bei Austritt aus dem Faserstummel einen für einen Bediener sichtbaren Lichtpunkt, welcher durch das zumindest teilweise transparent ausgebildete Betätigungselement für den Bediener sichtbar ist. Die optische Faser des optischen Kabels wird von einem dem Faserstummel gegenüberliegend Ende in die Steckverbindervorrichtung eingeführt. Stehen die Faserenden der optischen Faser des optischen Kabels und des Faserstummels in Kontakt, verschwindet der Lichtpunkt am Ende des Faserstummels. Daraufhin wird durch eine Betätigung eines Bedienelements das zumindest eine Betätigungsmittel aus der einen Federklemme der Steckverbindervorrichtung herausgeschoben, wodurch diese geschlossen wird und die optische Faser des optischen Kabels und der Faserstummel in ihrer Position fixiert werden. Durch ein derartiges Verfahren kann eine vorteilhaft einfache und schnelle Feldkonfektionierung einer erfindungsgemäßen Steckverbindervorrichtung erreicht werden.

### Zeichnung

Weitere Vorteile ergeben sich aus der folgenden Zeichnungsbeschreibung. In der Zeichnung sind vier Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen feldkonfektionierbaren optischen Steckverbinder mit einer erfindungsgemäßen Steckverbindervorrichtung in einem montierten Zustand,
- Fig. 2: einen Teil der Steckverbindervorrichtung mit einem als Gehäuseelement ausgebildeten Betätigungselement und ein zu konfektionierendes Faserende in einer Explosionsdarstellung,
- Fig. 3: das Betätigungselement in einer ersten Ansicht,
- Fig. 4: das Betätigungselement in einer zweiten Ansicht,
- Fig. 5: die Steckverbindervorrichtung bei hergestellter mechanischer Spleißung in einer Schnittdarstellung,
- Fig. 6: die Steckverbindervorrichtung bei aufgehobener mechanischer Spleißung in einer Schnittdarstellung,
- Fig. 7: eine Federklemme für die Steckverbindervorrichtung aus den Figuren 2 bis 6 mit einer elastisch und/oder plastisch verformbaren Schicht,
- Fig. 8: eine alternative Federklemme für die Steckverbindervorrichtung aus den Figuren 2 bis 6 mit einer Materialwölbung,
- Fig. 9: eine weitere alternative Federklemme für die Steckverbindervorrichtung aus den Figuren 2 bis 6 mit einer länglichen, einseitig randoffenen Materialausnehmung und
- Fig. 10: eine weitere Federklemme für die Steckverbindervorrichtung aus den Figuren 2 bis 6 mit einer in Umfangsrichtung allseitig geschlossenen Materialausnehmung.

### Beschreibung der Ausführungsbeispiele

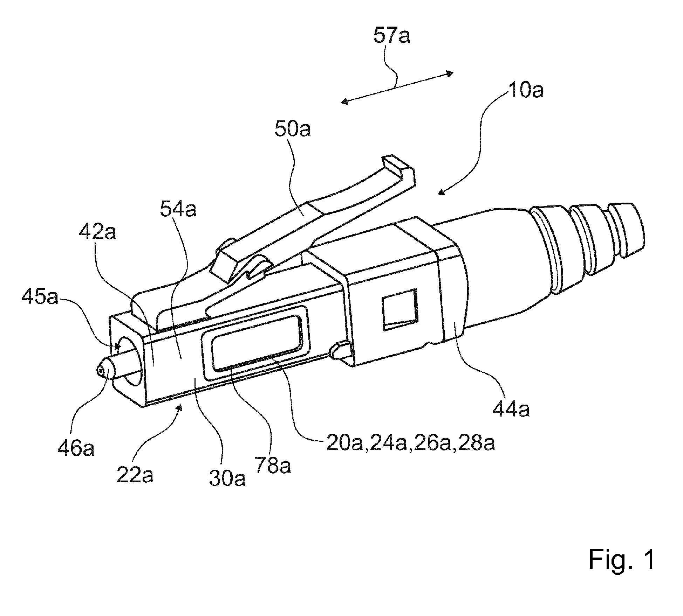

Figur 1 zeigt einen feldkonfektionierbaren optischen Steckverbinder 10a in einem montierten Zustand. Der Steckverbinder 10a ist als ein LC-Steckverbinder ausgebildet. Der Steckverbinder 10a umfasst eine erfindungsgemäße Steckverbindervorrichtung. Die Steckverbindervorrichtung umfasst eine Gehäuseeinheit 22a mit einem vorderen Gehäuseteil 42a und einem hinteren Gehäuseteil 44a. Die beiden Gehäuseteile 42a, 44a sind über eine Rastverbindung miteinander verbunden. Das vordere Gehäuseteil 42a weist in bekannter Weise eine Aufnahme 45a für eine Ferrule 46a auf. Am vorderen Gehäuseteil 42a ist ferner eine Rastklinke 50a angeformt, welche zu einer Verrastung in einer zum Steckverbinder 10a korrespondierenden Steckbuchse (nicht dargestellt) vorgesehen ist. Die Steckverbindervorrichtung umfasst ferner ein Betätigungselement 20a, mit dessen Hilfe ein Bediener, wie im Folgenden noch dargelegt, eine mechanische Spleißung mit einer zu konfektionierenden optischen Faser 16a herstellen oder aufheben kann. Das Betätigungselement 20a ist einstückig mit einem vom Bediener anfassbaren und im montierten Zustand von außerhalb der Gehäuseeinheit 22a bedienbaren Bedienelement 24a ausgeführt. Somit stehen das Betätigungselement 20a und das Bedienelement 24a im montierten Zustand miteinander in Wirkverbindung. Das Bedienelement 24a ist als ein Gehäuseelement 26a ausgebildet. Bei hergestellter mechanischer Spleißung schließt das Gehäuseelement 26a auf wenigstens einer Außenseite bündig mit der Gehäuseeinheit 22a, insbesondere mit dem vorderen Gehäuseteil 42a, ab.

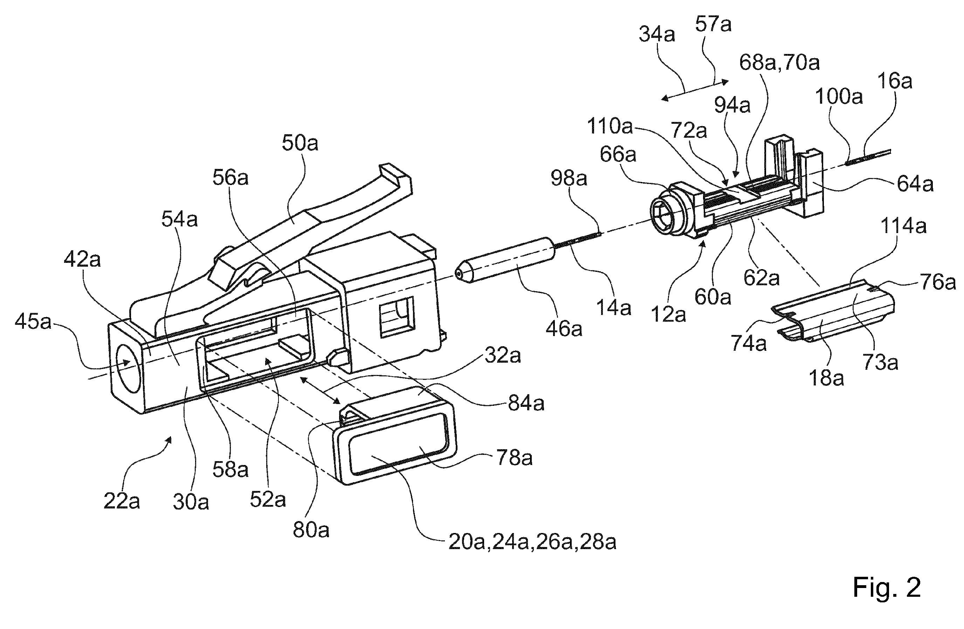

Figur 2 zeigt einen Teil der Steckverbindervorrichtung und eine zu konfektionierende optische Faser 16a in einer Explosionsdarstellung. Das vordere Gehäuseteil 42a weist einen Aufnahmebereich 52a für das Betätigungselement 20a auf. Der Aufnahmebereich 52a erstreckt sich quer durch das vordere Gehäuseteil 42a und durchdringt insbesondere zwei gegenüberliegende Seitenwände 54a, 56a des vorderen Gehäuseteils 42a. Das Bedienelement 24a ist im montierten Zustand zumindest teilweise im Aufnahmebereich 52a angeordnet. Das Bedienelement 24a ist als ein Verschiebeteil 28a ausgebildet, welches im montierten Zustand relativ zu wenigstens einem Element 30a der Gehäuseeinheit 22a, und zwar relativ zum vorderen Gehäuseteil 42a, verschiebbar ausgebildet ist. Eine Verschieberichtung 32a des Verschiebeteils 28a ist senkrecht zu einer Haupterstreckungsrichtung 57a der Gehäuseeinheit 22a angeordnet. Eine der Seitenwände 54a umfasst einen verjüngten und zurückgesetzten Bereich, welcher einen Anschlag 58a für das Betätigungselement 20a bildet.

Die Steckverbindervorrichtung umfasst eine optische Faser 14a, welche als Faserstummel ausgebildet und mit der Ferrule 46a vorkonfektioniert ist. Insbesondere findet eine Vorkonfektionierung unter kontrollierten Bedingungen und durch Fachpersonal statt.

Die Steckverbindervorrichtung weist eine Spleißeinheit 12a auf, welche dazu vorgesehen ist, eine mechanische Spleißung der vorkonfektionierten optischen Faser 14a mit der zu konfektionierenden optischen Faser 16a herzustellen. Die Spleißeinheit 12a ist einstückig als ein Spleißelement 60a ausgebildet. Die Spleißeinheit 12a weist eine Haupterstreckungsrichtung 34a auf, welche im montierten Zustand parallel zur Haupterstreckungsrichtung 57a der Gehäuseeinheit 22a angeordnet ist. Demzufolge sind die Verschieberichtung 32a des Verschiebeteils 28a und die Haupterstreckungsrichtung 34a der Spleißeinheit 12a zueinander unter einem Winkel von 90° angeordnet. Das Spleißelement 60a umfasst ein Mittelstück 62a, welches zumindest im Wesentlichen quaderförmig ausgebildet ist. An das Mittelstück 62a schließt sich an einem ersten Ende ein Kontaktelement 64a des Spleißelements 60a an, welches zu einer Kontaktierung mit weiteren Komponenten des Steckverbinders 10a vorgesehen ist (nicht dargestellt). Das Spleißelement 60a weist ferner eine Ferrulenaufnahme 66a auf, welches an einem zweiten Ende des Mittelstücks 62a anschließt und zur Aufnahme der Ferrule 46a vorgesehen ist. Im montierten Zustand ist die Ferrule 46a in der Ferrulenaufnahme 66a festgeklebt, wobei sich die vorkonfektionierte optische Faser 14a in eine Faserführungsstruktur 68a des Mittelstücks 62a hinein erstreckt. Die Faserführungsstruktur 68a ist als eine Nut 70a ausgebildet. Die Nut 70a erstreckt sich entlang des gesamten Mittelstücks 62a. Die Nut 70a weist in einem mittleren Bereich einen dreieckförmigen Querschnitt auf. Die Nut 70a weist an beiden Enden des Mittelstücks 62a jeweils einen sich trichterförmig erweiternden Bereich auf, wobei in Figur 2 lediglich einer dieser Bereiche sichtbar ist. Diese sind zur Vereinfachung einer Einführung der optischen Fasern 14a, 16a vorgesehen. Die optische Faser 14a erstreckt sich innerhalb der Nut 70a etwa bis zu einer Mitte 72a des Mittelstücks 62a. Zur Herstellung der mechanischen Spleißung wird die zu konfektionierende optische Faser 16a von der anderen Seite der Nut 70a her in diese eingeschoben, bis beide optische Fasern 14a, 16a etwa in der Mitte 72a aneinander anstehen. Zusätzlich ist Index-Matching-Gel in die Nut 70a eingebracht, um optische Verluste im Bereich der mechanischen Spleißung zu verringern.

Die Steckverbindervorrichtung umfasst ferner eine Federklemme 18a zur Fixierung der zwei optischen Fasern 14a, 16a in der Spleißeinheit 12a in einer Spleißposition durch eine Federkraft. Die Federklemme 18a weist einen zumindest im Wesentlichen U-förmigen Querschnitt auf. Die Federklemme 18a passt unter Vorspannung über das Mittelstück 62a. Im montierten Zustand umgreift die Federklemme 18a das Mittelstück 62a, insbesondere auf drei Seiten. Die Federklemme 18a drückt mit einem Federarm 73a unmittelbar auf die in der Faserführungsstruktur 68a angeordneten optischen Fasern 14a, 16a, wodurch diese in ihrer jeweiligen Position innerhalb der Faserführungsstruktur 68a fixiert sind. Der Federarm 73a weist an beiden Enden in Bereichen, welche sich im montierten Zustand oberhalb der sich trichterförmig erweiternden Bereiche befinden, jeweils eine trichterförmige Einführhilfe 74a, 76a auf, welche ebenfalls zur Vereinfachung einer Einführung der optischen Fasern 14a, 16a vorgesehen sind.

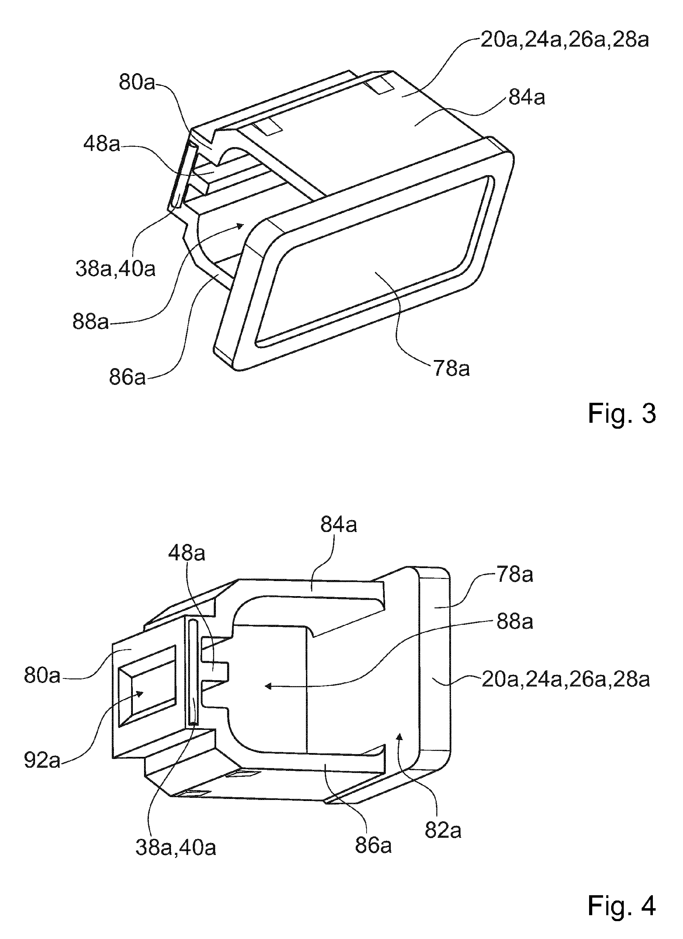

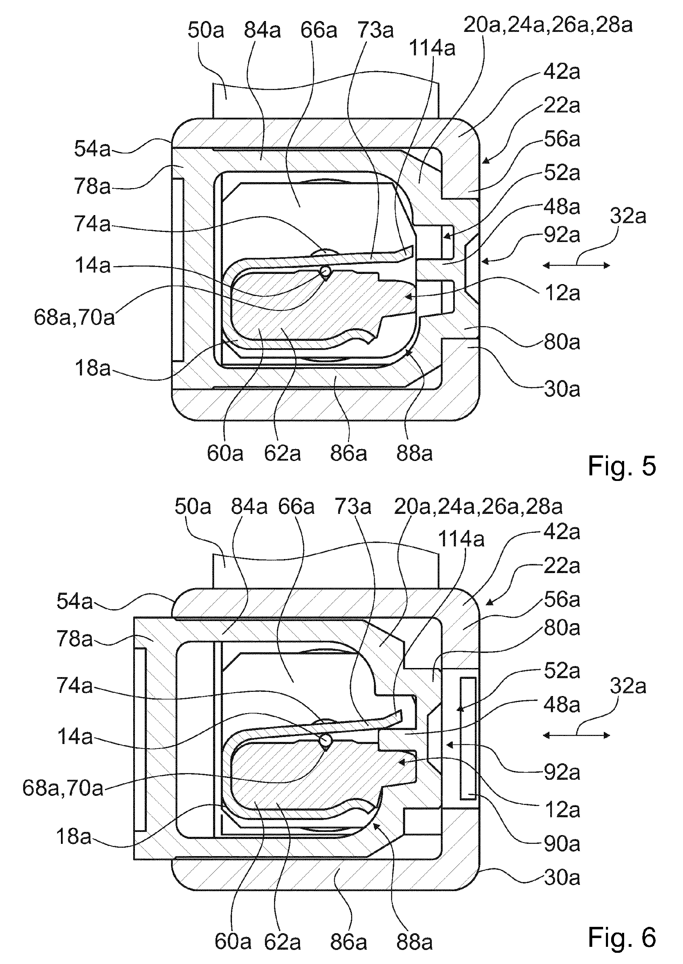

Figuren 3 und 4 zeigen zwei verschiedene Ansichten des Betätigungselements 20a. Das Betätigungselement 20a ist einstückig aus einem transparenten Kunststoff hergestellt. Das Betätigungselement 20a umfasst ein erstes Bedienteil 78a und ein zweites Bedienteil 80a, welche von außerhalb der Gehäuseeinheit 22a durch den Bediener anfassbar sind. Die Bedienteile 78a, 80a sind jeweils zumindest im Wesentlichen plattenartig ausgebildet. Haupterstreckungsebenen der Bedienteile 78a, 80a sind zumindest im Wesentlichen parallel zueinander angeordnet. Die Haupterstreckungsebenen der Bedienteile 78a, 80a sind zumindest im Wesentlichen senkrecht zur Verschieberichtung 32a angeordnet. Das Bedienteil 78a weist eine größere Längserstreckung als das Bedienteil 80a auf. Das Bedienteil 78a weist einen Bereich 82a auf, welcher im montierten Zustand und bei hergestellter mechanischer Spleißung den Anschlag 58a an der Seitenwand 54a kontaktiert (vgl. Figur 2). Der Bereich 82a steht über das Bedienteil 80a hinaus. Die Bedienteile 78a, 80a sind über Stege 84a, 86a miteinander verbunden. Haupterstreckungsebenen der Stege 84a, 86a sind zumindest im Wesentlichen parallel zueinander angeordnet. Die Haupterstreckungsebenen der Bedienteile 78a, 80a sind senkrecht zu den Haupterstreckungsebenen der Stege 84a, 86a angeordnet. Zwischen den Bedienteilen 78a, 80a und den Stegen 84a, 86a ist ein Aufnahmebereich 88a für die Spleißeinheit 12a und die Federklemme 18a angeordnet. Der Aufnahmebereich 88a weist einen zumindest im Wesentlichen rechteckigen, insbesondere quadratischen, Querschnitt auf. Das Betätigungselement 20a weist ein Betätigungsmittel 48a auf, welches zur Aufhebung der mechanischen Spleißung und insbesondere zu einem wenigstens teilweisen Öffnen der Federklemme 18a zwischen das Spleißelement 60a und den Federarm 73a der Federklemme 18a einführbar ist (vgl. Figuren 5 und 6). Das Betätigungsmittel 48a ist transparent und einstückig mit dem Betätigungselement 20a ausgebildet. Das Betätigungsmittel 48a ist quaderförmig ausgebildet und ragt in den Aufnahmebereich 88a hinein. Das Betätigungselement 20a weist ferner beidseitig des Bedienteils 80a jeweils ein Verriegelungselement 38a auf (lediglich eines sichtbar), welche dazu vorgesehen sind, das Betätigungselement 20a in einer geöffneten Position der zumindest einen Federklemme 18a zu verriegeln. Die Verriegelungselemente 38a sind als Rastelemente 40a, insbesondere als Rastnasen, ausgebildet. Die Verriegelungselemente 38a sind unmittelbar mit dem Bedienteil 80a verbunden.

Figuren 5 und 6 zeigen die Steckverbindervorrichtung jeweils in einer Schnittdarstellung mit Blick in Richtung eines vorderen Endes des Steckverbinders 10a. Figur 5 zeigt die Steckverbindervorrichtung bei hergestellter mechanischer Spleißung. Figur 6 zeigt die Steckverbindervorrichtung bei aufgehobener mechanischer Spleißung. Das als Verschiebeteil 28a ausgebildete Betätigungselement 20a ist zwischen zwei Endpositionen verschiebbar, und zwar einer Verriegelungsposition gemäß Figur 5 und einer Entriegelungsposition gemäß Figur 6. In der Verriegelungsposition (vgl. Figur 5) des Betätigungselements 20a liegt dieses mit dem Bereich 82a des Bedienteils 78 am Anschlag 58 der Seitenwand 54 an (vgl. auch Figur 2). Die Federklemme 18a ist frei von äußeren Krafteinflüssen und fixiert unmittelbar die auf Anschlag eingeschobenen optischen Fasern 14a, 16a in der Faserführungsstruktur 68a. In der Entriegelungsposition (vgl. Figur 6) liegt das Betätigungselement 20a mit dem Bedienteil 80a an dem Spleißelement 60a an. Eine Verschiebedistanz des Verschiebeteils 28a zwischen der Verriegelungsposition und der Entriegelungsposition beträgt 0,3 mm, wodurch ein präzises Öffnen und/oder Schließen der Federklemme 18a ermöglicht wird. Um ein Einführen des Betätigungsmittels 48a in die Federklemme 18a zu erleichtern und/oder um ein Verkanten und/oder Blockieren des Betätigungsmittels 48a bei einem Einführen zu verhindern, weist der Federarm 73a einen abgewinkelten Bereich 114a auf. Ferner ist das Betätigungselement 20a in der Entriegelungsposition durch das Verriegelungselement 38a mit einem korrespondierenden Verriegelungselement 90 der Gehäuseeinheit 22a verriegelt. In der Entriegelungsposition ist das Betätigungsmittel 48a des Betätigungselements 20a zwischen den Federarm 73a der Federklemme 18a und das Spleißelement 60a gepresst, so dass die Federklemme 18a entgegen der Federkraft zumindest teilweise geöffnet ist, wodurch ein vergleichsweise einfaches Einführen bzw. Entfernen der optischen Faser 16a ermöglicht ist. Das Betätigungselement 20a ist im montierten Zustand und insbesondere auch in der Verriegelungsposition unverlierbar in der Gehäuseeinheit 22a gelagert.

Dadurch, dass die Bedienteile 78a, 80a unterschiedlich groß ausgestaltet sind, wird einerseits eine bequeme Bedienbarkeit und andererseits einer unbeabsichtigten Aufhebung der mechanischen Spleißung entgegengewirkt. Zum Herstellen der mechanischen Spleißung ist bei geöffneter Federklemme 18a zunächst die optische Faser 16a durch das hintere Gehäuseteil 44a in die Faserführungsstruktur 68a des Spleißelements 60a einzuführen, bis die optische Faser 16a die optische Faser 14a innerhalb der Faserführungsstruktur 68a kontaktiert. Anschließend ist das Bedienteil 78a in das vordere Gehäuseteil 42a zu drücken (vgl. Figur 5). Das Bedienteil 78a ist von seiner Größe her derart ausgestaltet, dass eine bequeme Bedienbarkeit mit bloßen Händen möglich ist. Zum Aufheben der mechanischen Spleißung ist andererseits ein Drücken des kleineren Bedienteils 80a erforderlich (vgl. Figur 6). Dieses ist derart ausgestaltet, insbesondere mit einer zusätzlichen Einbuchtung 92a, dass eine Bedienung lediglich mit Hilfe eines Werkzeugs, insbesondere eines Schraubenziehers, möglich ist.

Bei einer Montage des Steckverbinders 10a wird gemäß der Figur 2 zunächst die optische Faser 14a mit der Ferrule 46a vorkonfektioniert. Ein Index-Matching-Gel wird in die Faserführungsstruktur 68a eingebracht. Anschließend wird die Federklemme 18a um das Spleißelement 60a herum angeordnet. Die Ferrule 46a wird anschließend in der Ferrulenaufnahme 66a des Spleißelements 60a verklebt, und zwar derart, dass die optische Faser 14a in der Faserführungsstruktur 68a des Spleißelements 60a angeordnetund durch die Federklemme 18a in der Faserführungsstruktur 68a fixiert ist. Anschließend werden weitere Komponenten des Steckverbinders 10a, insbesondere eine Druckfeder, mit dem Kontaktelement 64a des Spleißelements 60a verbunden, insbesondere durch eine Rastverbindung. Das Betätigungselement 20a wird in das vordere Gehäuseteil 42a der Gehäuseeinheit 22a eingeführt. Anschließend wird das Spleißelement 60a zusammen mit der vormontierten Federklemme 18a, der vormontierten und vorkonfektionierten optischen Faser 14a und den weiteren vormontierten Komponenten mit der Ferrule 46a voran in das vordere Gehäuseteil 42a und in den Aufnahmebereich 88a des Betätigungselements 20a eingeführt. Anschließend wird das hintere Gehäuseteil 44a der Gehäuseeinheit 22a aufgeschoben und mit dem vorderen Gehäuseteil 42a verrastet.

Bei einer Feldkonfektionierung eines optischen Kabels mit dem Steckverbinder 10a wird zunächst ein Mantel eines optischen Kabels (nicht dargestellt) teilweise entfernt und somit die optische Faser 16a freigelegt. An die Ferrule 46a wir ein Lichtsignal, vorzugsweise ein Rotlichtsignal, angelegt. Das Lichtsignal erzeugt bei Austritt aus der optischen Faser 14a einen für einen Bediener sichtbaren Lichtpunkt, welcher durch das transparent ausgebildete Betätigungselement 20a für den Bediener sichtbar ist. Die optische Faser 16a wird von einem der Ferrule 46a gegenüberliegend Ende in die Steckverbindervorrichtung eingeführt. Stehen die Faserenden 98a, 100a der optischen Fasern 14a, 16a in Kontakt, verschwindet der Lichtpunkt am Ende der optischen Faser 14a. Daraufhin wird durch eine Betätigung des Bedienteils 78a das Betätigungsmittel 48a aus der eine Federklemme 18a herausgeschoben, wodurch diese geschlossen wird und die optischen Fasern 14a, 16a in ihrer Position fixiert werden.

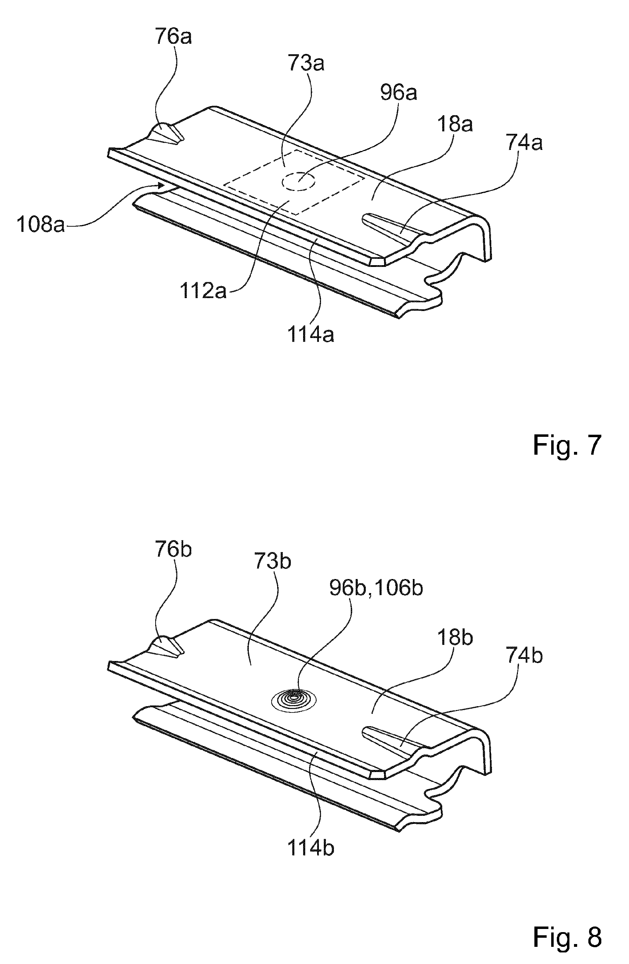

Figur 7 zeigt die Federklemme 18a in einer vergrößerten Ansicht. Die Einführhilfe 74a weist gegenüber der Einführhilfe 76a eine größere Längserstreckung auf, wodurch eventuell auftretende Fluchtungsfehler zwischen der Ferrule 46a und der Faserführungsstruktur 68a kompensiert werden. Auf einer Innenseite 108a weist die Federklemme 18a eine elastisch und/oder plastisch verformbare Schicht 112a auf. Bei einer wie in Figur 5 hergestellten Spleißung bildet die elastisch und/oder plastisch verformbare Schicht 112a, insbesondere in einem Spleißbereich 94a der Faserenden 98a, 100a, eine Aussparung 96a (hier lediglich angedeutet) aus, wodurch eine mechanische Belastung der Faserenden 98a, 100a reduziert und somit eine Beschädigung der optischen Fasern 14a, 16a, insbesondere der Faserenden 98a, 100a der optischen Fasern 14a, 16a, verhindert wird. Wie in Figur 1 gezeigt, weist die Spleißeinheit 12a eine zu der Aussparung 96a der Federklemme 18a korrespondierende weitere Aussparung 110a auf, welche ebenfalls im Spleißbereich 94a angeordnet ist. Hierdurch kann eine mechanische Belastung der optischen Fasern 14a, 16a weiter reduziert und/oder eine exakte Ausrichtung der Faserenden 98a, 100a realisiert werden.

In den Figuren 8 bis 10 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In dem Ausführungsbeispiel der Figuren 8 bis 10 ist der Buchstabe a durch die Buchstaben b bis d ersetzt.

Figur 8 zeigt eine alternative Ausführung einer Federklemme 18b. Die Federklemme 18b weist eine als Materialwölbung 106b ausgebildete Aussparung 96b auf. In einem montierten Zustand weist die Materialwölbung 106b von einer Spleißeinheit 12b weg und ist in einem Spleißbereich 94b angeordnet. Die Materialwölbung 106b ist dazu vorgesehen, in einem gespleißten Zustand insbesondere Faserenden 98b, 100b optischer Fasern 14b, 16b aufzunehmen und somit eine mechanische Belastung der Faserenden 98b, 100b zu verhindern. Ferner ist die Materialwölbung 106b dazu vorgesehen, ein Index-Matching Gel aufzunehmen und ein unerwünschtes Abfließen des Index-Matching Gels zu verhindern. Die Materialwölbung 106b kann beispielsweise durch ein Prägeverfahren oder ein anderes geeignetes Verfahren in einen Federarm 73b der Federklemme 18b eingebracht sein.

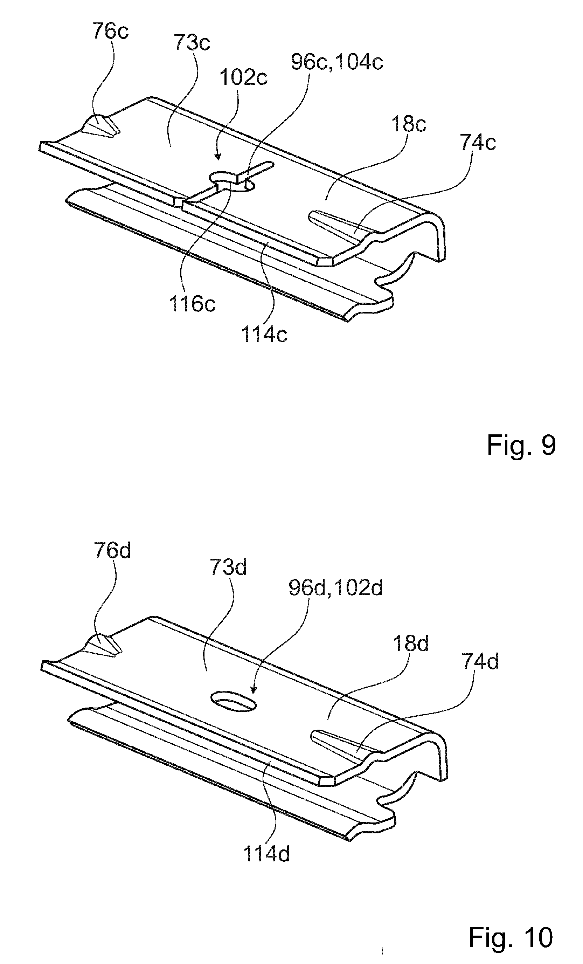

Figur 9 zeigt eine weitere alternative Ausführung einer Federklemme 18c. Die Federklemme 18c weist eine als Materialausnehmung 102c ausgebildete Aussparung 96c auf. Die Aussparung 96c ist als eine in einem montierten Zustand der Federklemme 18c quer zu einer Haupterstreckungsrichtung 34c einer Spleißeinheit 12c verlaufende längliche Ausnehmung 104c ausgebildet. In einem montierten Zustand ist die längliche Ausnehmung 104c in einem Spleißbereich 94c angeordnet. Die längliche Ausnehmung 104c ist einseitig randoffen ausgeführt. Die längliche Ausnehmung 104c weist einen verbreiterten Bereich 116c auf. Die längliche Ausnehmung 104c ist dazu vorgesehen, in einem gespleißten Zustand insbesondere Faserenden 98c, 100c optischer Fasern 14c, 16c aufzunehmen und somit eine mechanische Belastung der Faserenden 98c, 100c zu verhindern. Der verbreiterte Bereich 116c der länglichen Ausnehmung 104c ist ferner dazu vorgesehen, ein Index-Matching Gel aufzunehmen.

Figur 10 zeigt eine weitere alternative Ausführung einer Federklemme 18d. Die Federklemme 18d weist eine als Materialausnehmung 102d ausgebildete Aussparung 96d auf. Die Materialausnehmung 102d ist in Umfangsrichtung allseitig geschlossen ausgeführt. In einem montierten Zustand ist die Materialausnehmung 102d in einem Spleißbereich 94d angeordnet. Die Materialausnehmung 102d ist dazu vorgesehen, in einem gespleißten Zustand insbesondere Faserenden 98d, 100d optischer Fasern 14d, 16d aufzunehmen und somit eine mechanische Belastung der Faserenden 98c, 100c zu verhindern. Ferner ist die Materialausnehmung 102d dazu vorgesehen, ein Index-Matching Gel aufzunehmen.

### Bezugszeichen

- 10: Steckverbinder
- 12: Spleißeinheit
- 14: Optische Faser
- 16: Optische Faser
- 18: Federklemme
- 20: Betätigungselement
- 22: Gehäuseeinheit
- 24: Bedienelement
- 26: Gehäuseelement
- 28: Verschiebeteil
- 30: Element
- 32: Verschieberichtung
- 34: Haupterstreckungsrichtung
- 38: Verriegelungselement
- 40: Rastelement
- 42: Vorderes Gehäuseteil
- 44: Hinteres Gehäuseteil
- 45: Aufnahme
- 46: Ferrule
- 48: Betätigungsmittel
- 50: Rastklinke
- 52: Aufnahmebereich
- 54: Seitenwand
- 56: Seitenwand
- 57: Haupterstreckungsrichtung
- 58: Anschlag
- 60: Spleißelement
- 62: Mittelstück
- 64: Kontaktelement
- 66: Ferrulenaufnahme
- 68: Faserführungsstruktur
- 70: Nut
- 72: Mitte
- 73: Federarm
- 74: Einführhilfe
- 76: Einführhilfe
- 78: Bedienteil
- 80: Bedienteil
- 82: Bereich
- 84: Steg
- 86: Steg
- 88: Aufnahmebereich
- 90: Verriegelungselement
- 92: Einbuchtung
- 94: Spleißbereich
- 96: Aussparung
- 98: Faserende
- 100: Faserende
- 102: Materialausnehmung
- 104: Ausnehmung
- 106: Materialwölbung
- 108: Innenseite
- 110: Aussparung
- 112: Schicht
- 114: Bereich
- 116: Bereich

## Patentansprüche

1. Steckverbindervorrichtung, insbesondere für einen feldkonfektionierbaren optischen Steckverbinder (10a; 10b; 10c; 10d), mit zumindest einer Spleißeinheit (12a; 12b; 12c; 12d), welche dazu vorgesehen ist, eine mechanische Spleißung wenigstens zweier optischer Fasern (14a, 16a; 14b, 16b; 14c, 16c; 14d, 16d) herzustellen, mit zumindest einer Federklemme (18a; 18b; 18c; 18d) zur Fixierung der wenigstens zwei optischen Fasern (14a, 16a; 14b, 16b; 14c, 16c; 14d, 16d) in der zumindest einen Spleißeinheit (12a; 12b; 12c; 12d) in einer Spleißposition durch zumindest eine Federkraft, und mit wenigstens einem in einem montierten Zustand und in einer Schließstellung der zumindest einen Federklemme (18a; 18b; 18c; 18d) unverlierbaren Betätigungselement (20a; 20b; 20c; 20d), welches dazu vorgesehen ist, die zumindest eine Federklemme (18a; 18b; 18c; 18d) entgegen der Federkraft wenigstens teilweise zu öffnen, und welches zumindest ein wenigstens im Wesentlichen quaderförmig ausgebildetes Betätigungsmittel (48a; 48b; 48c; 48d) aufweist, welches zu einem Einschieben in einen Bereich der zumindest einen Federklemme (18a; 18b; 18c; 18d) vorgesehen ist.

2. Steckverbindervorrichtung nach Anspruch 1, **gekennzeichnet durch** eine Gehäuseeinheit (22a; 22b; 22c; 22d) und zumindest ein Bedienelement (24a; 24b; 24c; 24d), mit welchem das wenigstens eine Betätigungselement (20a; 20b; 20c; 20d) im montierten Zustand in Wirkverbindung steht und welches von außerhalb der Gehäuseeinheit (22a; 22b; 22c; 22d) bedienbar ist.

3. Steckverbindervorrichtung nach Anspruch 2, **dadurch gekennzeichnet, dass** das zumindest eine Bedienelement (24a; 24b; 24c; 24d) als ein Verschiebeteil (28a; 28b; 28c; 28d) ausgebildet ist, welches im montierten Zustand relativ zu wenigstens einem Element (30a; 30b; 30c; 30d) der Gehäuseeinheit (22a; 22b; 22c; 22d) verschiebbar ausgebildet ist.

4. Steckverbindervorrichtung nach Anspruch 3, **dadurch gekennzeichnet, dass** eine Verschieberichtung (32a; 32b; 32c; 32d) des Verschiebeteils (28a; 28b; 28c; 28d) und eine Haupterstreckungsrichtung (34a; 34b; 34c; 34d) der zumindest einen Spleißeinheit (12a; 12b; 12c; 12d) zueinander unter einem Winkel von mehr als 0° und weniger als 180° angeordnet sind.

5. Steckverbindervorrichtung nach Anspruch 3 oder 4, **dadurch gekennzeichnet, dass** eine für ein vollständiges Öffnen und/oder Schließen der zumindest einen Federklemme (18a; 18b; 18c; 18d) benötigte Verschiebedistanz des Verschiebeteils (28a; 28b; 28c; 28d) zumindest 0,1 mm beträgt.

6. Steckverbindervorrichtung nach einem der vorhergehenden Ansprüche, **dadurch gekennzeichnet, dass** die zumindest eine Federklemme (18a; 18b; 18c; 18d) zumindest einen abgewinkelten Bereich (114a; 114b; 114c; 114d) aufweist, welcher dazu vorgesehen ist, ein Einschieben des zumindest einen Betätigungsmittels (48a; 48b; 48c; 48d) zu ermöglichen und/oder zu vereinfachen.

7. Steckverbindervorrichtung nach einem der vorhergehenden Ansprüche, **dadurch gekennzeichnet, dass** das wenigstens eine Betätigungselement (20a; 20b; 20c; 20d) zumindest ein Verriegelungselement (38a; 38b; 38c; 38d) umfasst, welches dazu vorgesehen ist, das wenigstens eine Betätigungselement (20a; 20b; 20c; 20d) zumindest in einer geschlossenen Position der zumindest einen Federklemme (18a; 18b; 18c; 18d) zu verriegeln.

8. Steckverbindervorrichtung nach Anspruch 7, **dadurch gekennzeichnet, dass** das zumindest eine Verriegelungselement (38a; 38b; 38c; 38d) als ein Rastelement (40a; 40b; 40c; 40d) ausgebildet ist.

9. Steckverbindervorrichtung zumindest nach den Ansprüchen 2 und 8, **dadurch gekennzeichnet, dass** das zumindest eine Verriegelungselement (38a; 38b; 38c; 38d), dazu vorgesehen ist, mit der Gehäuseeinheit (22a; 22b; 22c; 22d) zu verrasten.

10. Steckverbindervorrichtung nach einem der vorherigen Ansprüche, **dadurch gekennzeichnet, dass** das wenigstens eine Betätigungselement (20a; 20b; 20c; 20c; 20d) zumindest teilweise transparent ausgebildet ist.

11. Steckverbindervorrichtung nach einem der vorhergehenden Ansprüche, **dadurch gekennzeichnet, dass** die zumindest eine Spleißeinheit (12a; 12b; 12c; 12d) einstückig ausgebildet ist und eine Klemmung der wenigstens zwei optischen Fasern (14a, 16a; 14b, 16b; 14c, 16c; 14d, 16d) unmittelbar zwischen der zumindest einen Federklemme (18a; 18b; 18c; 18d) und der zumindest einen Spleißeinheit (12a; 12b; 12c; 12d) erfolgt.

12. Steckverbinder, insbesondere feldkonfektionierbarer Steckverbinder, insbesondere LC-Steckverbinder oder SC-Steckverbinder oder LSH-Steckverbinder, mit zumindest einer Steckverbindervorrichtung nach einem der vorhergehenden Ansprüche.

13. Verfahren zur Feldkonfektionierung eines optischen Kabels mit einem Steckverbinder (10a; 10b; 10c; 10d) nach Anspruch 12.
